# EUROPEAN PATENT SPECIFICATION

(11) **EP 1 772 222 B1**
(45) Date of publication and mention of the grant of the patent: **17.11.2010**
(21) Application number: 06119995.6
(22) Date of filing: 01.09.2006
(51) Int. Cl.: B23D 47/08, B23D 45/02

(54) **Sliding compound miter saw with locking mechanism**
Gehrungssäge mit Verriegelungsvorrichtung
Scie à onglets avec mécanisme de verrouillage

(30) Priority: 07.10.2005 GB 0520409
(43) Date of publication of application: 11.04.2007
(73) Proprietor: Black & Decker, Inc., Newark, DE 19711 (US)
(72) Inventor: Rossetti, Mirco, 01625 PERUGIA (IT); Bettacchini, Marcello, 06074 PERUGIA (IT)
(74) Representative: Bell, Ian Stephen

(56) References cited:
- EP-A1- 0 242 733
- EP-A1- 0 633 106
- DE-C1- 3 807 158
- US-A- 5 957 021
- US-B1- 6 170 373

## Description

The present invention relates to powered saws having a chopping and sliding function, and in particular to a saw having the features of the preamble of claim 1. Such a saw is known from DE 3 807 158.

Chop saws comprise a motor unit pivotally mounted on a base. The motor unit is located above the base and can pivot between a high position where it is located further most away from the base to a low position where a circular saw blade, which is mounted on the motor unit and which is capable of being rotationally driven by a motor located within the motor unit, can engage with a work piece located on the base. A spring biases the motor unit to its upper most position.

Such saws can have a sliding feature wherein the motor unit, in addition to be able to perform a pivotal or chopping movement, can slide linearly across the base to perform a slide cut. Furthermore, these types of saw can include mechanisms by which they are able to perform mitre and/or bevel cuts on work pieces located on the base. A saw which is capable of performing chop, sliding, bevel and mitre cuts is known as a sliding compound miter saw.

WO98/18588 describes one construction of a sliding compound mitre saw.

WO98/18588 discloses a sliding compound mitre saw which comprises a base 12 (using the same reference numbers as those used in WO98/18588) having a rotatable table 14 mounted within it. The rotatable table 14, in conjunction with a fence 26 fixed to the base 12, enables the sliding compound mitre saw to perform mitre cuts. Connected to the rear of the table 14 is a bevel mount 16 which is able to pivot about a horizontal axis in relation to the table 14. The pivotal movement of the bevel mount 16 in relation to the table 14 enables the sliding compound mitre saw to perform bevel cuts. Slideably mounted onto the bevel mount 16 are two guide rods 34 which are capable of sliding horizontally, back wards and forwards. The rods 34 enable the sliding compound mitre saw to perform sliding cuts. Pivotally mounted on the end of the guide rods 34 is a motor unit 36, which comprises a motor 22 for rotationally driving a circular saw blade 18 mounted on a drive spindle on the motor unit 36. The pivotal movement of the motor unit 36 in relation to the guide rods 34 enable the saw to perform chop cuts.

EP0242733 discloses a different construction for a sliding compound mite saw to that disclosed in WO98/18588.

EP0242733 discloses a sliding compound mitre saw which comprises a base having a rotatable table mounted within it. The rotatable table, in conjunction with a fence fixed to the base, enables the sliding compound mitre saw to perform mitre cuts. Connected to the rear of the table is a bevel mount which is able to pivot about a horizontal axis in relation to the table. The pivotal movement of the bevel mount in relation to the table enables the sliding compound mitre saw to perform bevel cuts.

Pivotally mounted onto the bevel mount are two guide rods which are capable of pivoting about an axis, parallel to the axis of rotation of the saw blade of the saw, between an upper and lower position. This enables the saw to perform chop cuts.

Slidingly mounted on the guide rods is a motor unit, which comprises a motor for rotationally driving the circular saw blade mounted on a drive spindle on the motor unit 36. The sliding movement of the motor unit along the guide rods enables the saw to perform sliding cuts.

DE3807158 describes a saw according to the preamble of claim 1.

The object of the present invention is to provide a locking mechanism for sliding compound mitre saws to lock them in a storage position.

According to the present invention, there is provided a saw having the features of claim 1.

An embodiment of the present invention will now be described with reference to the accompanying drawings of which:-
Figure 1 shows a perspective view of an embodiment of the saw;
Figure 2 shows a computer generated schematic diagram of the saw with the saw assembly in the lower position;
Figure 3 shows a computer generated schematic diagram of the saw with the saw assembly (partially cut away) in the upper position; and
Figure 4 shows a computer generated schematic diagram of part of the locking mechanism of the saw.

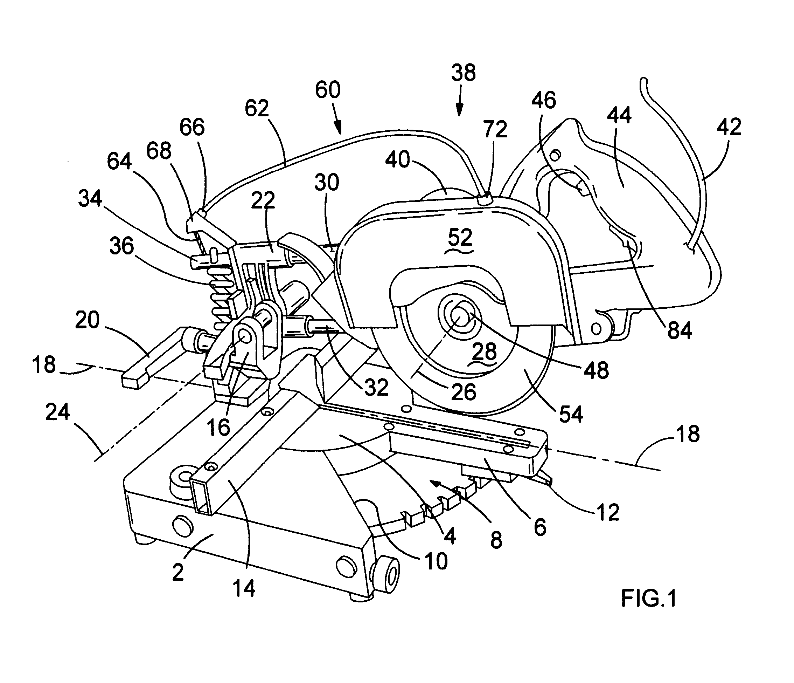

Referring to Figure 1, the saw comprises a base 2 in which is mounted a circular table 4. The circular table 4 can rotate about a vertical axis. An arm 6 is attached to the front of the circular table 4 which extends through a recess 8 formed in the front of the base 2 and then forward of the base 2. As the circular table rotates, the arm 6 swings within the recess 8, the maximum amount of pivotal movement being limited by the sides 10 of the recess 8. A latch 12 is attached to the underside of the end of the arm 6 which is capable of releasably locking the angular position of the arm 6 within the recess 8 in well known manner. A fence 14 is rigidly attached to the base 2 and passes over the circular table 4.

Pivotally attached to the rear of the circular table 4 is a bevel support 16. The bevel support 16 can pivot about a horizontal bevel axis 18. The bevel support 16 can be locked in a range of angular positions relative to the circular table 4 using a locking handle 20. The mechanism by which the locking handle 20 locks the bevel support 16 is of no relevance to the present invention and therefore shall not be described in more any detail.

Pivotally mounted onto the bevel support 16 is a slide support 22. The slide support 22 can pivot about a chopping axis 24 which is parallel to the axis of rotation 26 of a cutting blade 28 (described further below).

Rigidly mounted within the slide support 22 are the ends of two straight rods 30; 32. The rods 30; 32 are prevented from sliding or rotating within the slide support 22. The rods 30, 32 are located one above the other and are parallel to each other. Attached to the end 34 of the top rod 30 is a spring 36. The other end of the spring 36 is attached to the bevel support 16. The spring 36 is under tension, biasing the end 34 of the top rod 30 downwardly, biasing the ends of the two rods 30, 32 located remotely from the slide support 22 upwardly due to the pivotal connection of the slide support 22 to the bevel support 16.

Slideably mounted onto the two rods 30, 32 is a saw assembly 38.

The saw assembly 38 comprises a motor housing 40 in which is mounted an electric motor (not shown). The electric motor is powered via an electric cable 42. Mounted on the rear of the motor housing 40 is a handle 44. A trigger switch 46 is mounted within the handle 44, which when depressed, activates the motor. A drive spindle 48 projects from the housing 40. A circular saw blade 28 is rigidly mounted onto the drive spindle 48. When the motor, is activated, the drive spindle rotates, rotatingly driving the saw blade 28. A fixed guard 52 is rigidly mounted onto the motor housing 40 and surrounds the top cutting edge of the saw blade 28. A pivotal guard 54 is pivotally mounted on the motor housing 40 and can pivot about the axis of rotation 26 of the saw blade 28. The pivotal guard 54 can pivot between an enclosed position where it surrounds the lower cutting edge of the saw blade 28 and a retracted position where it exposes the lower cutting edge of the saw blade 28. When the pivotal guard is in the retracted position, it is telescopically pivoted into the fixed guard 52. A pivotal guard spring (not shown) biases the pivotal guard 54 to the enclosed position.

The saw assembly 38 can slide along the two rods 30, 32 towards or away from the slide support 22.

In use, a work piece is placed on the base 2 and circular table 4 against the fence 14. The pivotal movement of the circular table 4 about the vertical axis allows the saw to perform mitre cuts on the work piece. The pivotal movement of the bevel support 16 in relation to the circular table 4 about the bevel axis 18 allows the saw to perform bevel cuts on the work piece. The pivotal movement of the slide support 22 on the bevel support 16 about the chopping axis 24 allows the saw to perform chop cuts on the work piece. The sliding movement of the saw assembly 38 along the two rods 30, 32 allows the saw to perform sliding cuts on the work piece.

The saw comprises a pivotal guard actuating mechanism. The pivotal guard actuating mechanism causes the pivotal guard to pivot to its retracted position when the saw assembly is pivoted about the chopping axis 24 from its upper position to its lower position. The spring 36 biases the saw assembly 38 to pivot about the chopping axis 24 to its upper most position. In this position, the pivotal guard 54 encloses the lower edge of the cutting blade 28. As the saw assembly is pivoted downwardly towards the circular table 4, the pivotal guard actuating mechanism causes the guard 54 to retract into the fixed guard 52, exposing the lower cutting edge of the blade 28.

The pivotal guard actuating mechanism will now be describe in more detail with references to figures 1, 2 and 3.

The pivotal guard actuating mechanism comprises a Bowden cable 60. The Bowden cable comprises an outer sleeve 62 and an inner cable 64. The Bowden cable has two ends, each end comprising two parts, one part being one end of the inner cable 64 and the other part being a corresponding end of the outer sleeve 62.

The first end of the Bowden cable 60 is connected across the pivot joint formed between the bevel support 16 and the sliding support 22. The end 66 of the sleeve 62 of the first end of the Bowden cable is rigidly connected to the sliding support 22 via a fixed support 68. The end 70 of the cable 64 of the first end of the Bowden cable 60 is connected to the bevel support 16.

The second end of the Bowden cable is connected across the pivot joint formed between the fixed guard 52 and the pivotal guard 54. The end 72 of the sleeve 62 of the second end of the Bowden cable 60 is rigidly connected to the fixed guard 52. The end 74 of the cable 64 of the second end of the Bowden cable 60 is connected to the pivotal guard 54. The cable 64, between its second end 74 and the fixed end 72 of the sleeve 62, wraps around a tube 76 which surrounds the drive spindle 48.

The pivotal guard actuating mechanism operates as follows.

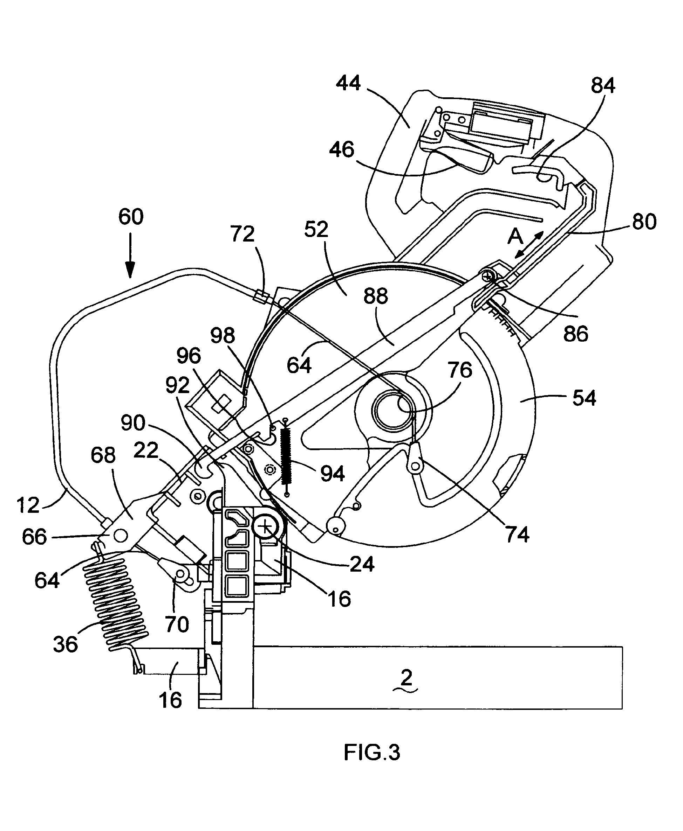

The saw assembly is biased to its upper position (as shown in Figure 3) by the spring 36 acting on the end 34 of the upper rod 30 (not shown in Figure 3). The pivotal guard spring biases the pivotal guard 54 to its enclosed position where it surrounds the lower cutting edge of the saw blade 28. When the pivotal guard is in this position, the end 74 of the cable 64 of the second end of the Bowden cable is pulled the furthest distance from the end 72 of the sleeve 62 of the second end of the Bowden cable by the pivot guard spring. In contrast, the end 70 of the cable 64 of the first end of the Bowden cable 60 is pulled into the sleeve 62, causing it to be at the shortest distance from the end 66 of the sleeve 62 of the first end of the Bowden cable 60.

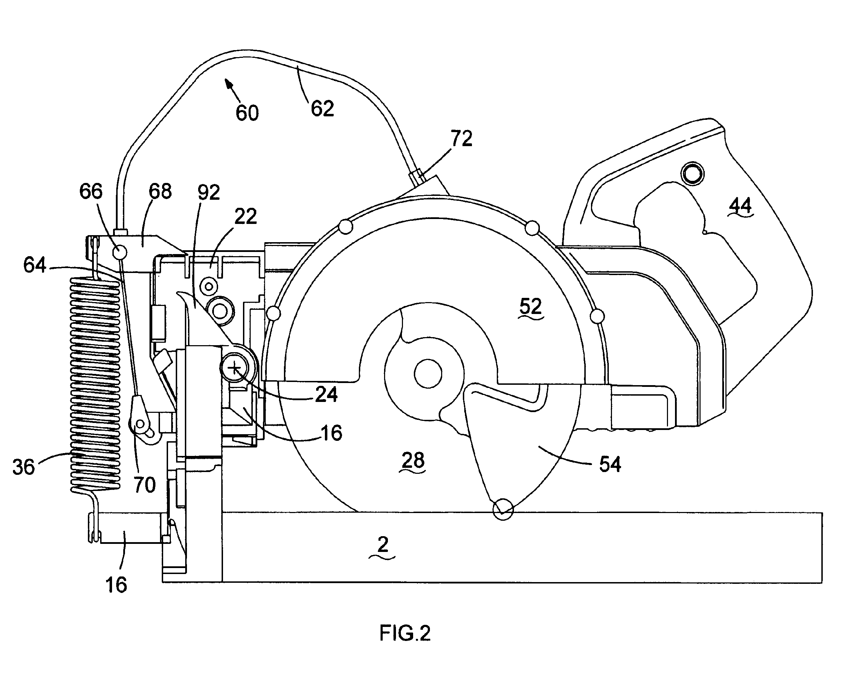

However, when the saw assembly is pivoted to its lowest position as shown in Figure 2, the distance between the end 70 of the cable 64 of the first end of the Bowden cable 60 from the end 66 of the sleeve 62 of the first end of the Bowden cable 60 is forced to increase. This is due to the fact that the position of the end 70 of the cable attached to the bevel support 16 remains stationary whilst the end 66 of the sleeve 62 attached to the sliding support 22 moves due to the relative pivotal movement between the bevel support 16 and the sliding support 22. The increase in this length results in a decrease in the length of cable 64 between the end 72 of the sleeve 62 connected to the fixed guard 52 and the end 74 of the cable 64 attached to the pivotal guard 54. As the cable 64 is retracted into the sleeve 62 at the second end of the Bowden cable 60, it travels around the tube 76 causes the pivotal guard 54 to pivot to its retracted position.

When the saw assembly is pivoted to its highest position, the distance between the end 70 of the cable 64 of the first end of the Bowden cable 60 from the end 66 of the sleeve 62 of the first end of the Bowden cable 60 is reduced allowing the pivotal guard 54 to pivot to its enclosed position due to the biasing force of the pivotal guard spring.

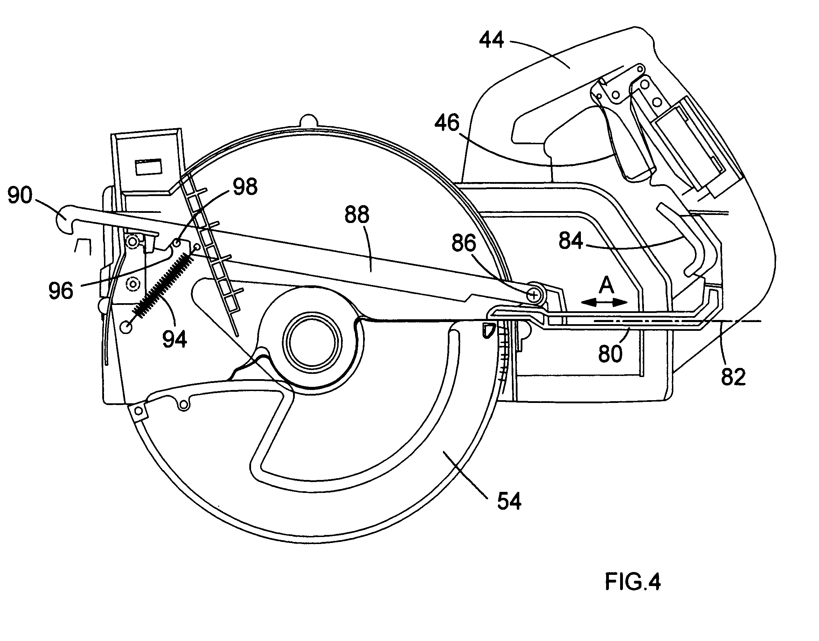

The saw also comprises a locking mechanism which will now be described with reference to Figure 4. When the saw is not in use, it is desirable to be able to lock the position of the saw assembly 38 relative to the bevel support 16 in a storage position. When the saw is not in use, the saw assembly moves to its upper most position (Figure 3) due to the biasing force of the spring 36. The saw assembly 38 then slides under gravity along the rods 30, 32 which are inclined due to the spring 36, towards and abuts against the sliding support 22. It is desirable to lock the saw assembly in this storage position and prevent accidental movement of the saw assembly 38 in relation to the bevel support 16.

The locking mechanism comprises a retracting rod 80 slideably mounted within the handle 44. The retraction rod 80 can slide along axis 82 in the direction indicated by Arrow A as shown in Figure 4. Formed on one end of the retraction rod 80 is a finger pad 84 which projects through the handle 44 and by which a user can engage the retraction rod 80 to release the locking mechanism.

Pivotally connected about point 86 to the other end of the retraction rod 80 is a locking rod 88. The locking rod 88 extends pass the fixed guard 52 towards the bevel support 16. A hook 90 is formed on the end of the locking rod 88 closest to the bevel support 16. A catch 92 (as seen in Figures 2 and 3) is mounted on the bevel support 16. When the saw assembly 38 is in its storage position as shown in Figure 3, the hook 90 engages with the catch 92 to lock the saw assembly 38 in this position. When the saw assembly is locked in this position, it can not pivot downwardly about axis 24 or slide along the rods 30, 32. The hook 90 is kept in engagement with the catch 92 via a spring 94, connected between the locking rod 88 and the motor housing 40, which biases the hook 90 downwardly.

Formed on the locking rod 88 in close proximity to the hook 90 is a cam surface 96. A peg 98 is formed on the motor housing 40 which engages with the can surface 96. The spring 94 biases the peg 98 and the cam surface 96 into engagement. When the hook 90 is engaged with the catch 92, the peg 98 is located in the upper most position along the cam surface 96 as shown in Figure 4.

In order to release the hook form the catch 92, an operator depresses the finger pad 84, moving it away from the bevel support 16 and causing the retraction rod 80 to slide along the axis 82. This in turn pulls the locking rod 88 away from the bevel support 16. This results in the peg 98 sliding along the cam surface 96 causing the locking rod 88 to move upwards against the biasing force the spring 94. This causes the hook 90 to be moved above the catch 92, allowing the operator to move the saw assembly 38 using the handle 44 either by pivoting it about axis 24 or sliding it along rods 30, 32. When the operator ceases to depress the finger pad 84, the biasing force of the spring 94 moves the hook downwardly.

In order to re-engage the hook 90 with the catch 92, the operator places the saw assembly in the storage position. As the saw assembly moves into the storage position, the hook 90 rides over and then engages with the catch 92 due to its shape.

## Claims

1. A saw comprising:
a base assembly (2, 4) connected to a mounting portion (16);
a saw unit (38, 22) pivotally mounted on the mounting portion (16) to allow the saw unit (38) to pivot towards or away from the base assembly (2, 4), the saw unit (38) having an output drive spindle (48) upon which a circular saw blade (28) can be rigidly mounted to be rotationally driven by a motor;
the axis (26) of rotation of the drive spindle (48) being substantially parallel to the axis (24) of pivot between saw unit (38) and the mounting portion (16);
pivotal biasing means (36) to urge the saw unit (38) to its upper most pivotal position;
at least one pivotal guard (54) pivotally mounted on the saw unit (38) which can pivot from a first position, where it surrounds at least a portion of the lower edge of a saw blade (28) when mounted on the spindle (48), to a second retracted position where the portion of the lower edge of the saw blade (28) is exposed; and
a guide mechanism (30, 32) which enables the saw unit (38) to move linearly relative to the mounting portion (16) in order to change the distance between the axis (26) of rotation of the pivotal guard and the mounting portion (16); and
guide biasing means to urge the saw unit (38) towards a position closest to the mounting portion (16); and
a locking mechanism which is capable of locking the position of the saw unit (38) relative to the base assembly (2, 4) when the saw unit is in its upper most pivotal position and in the position closest to the mounting portion (16), wherein the locking mechanism comprises two parts, the first part comprising a hook (90), the second part comprises a catch (92), wherein one part is mounted on the saw unit (38), and the other part is mounted on the mounting portion (16), the two parts engaging with each other to lock the position of the saw unit relative to the base assembly (2,4);
**characterized in that** the locking mechanism comprises a release mechanism connected to the hook (90) and which comprises two parts, a first part comprising a cam surface (96), the second part comprising a cam follower (98) in engagement with the cam surface (96), one part connected to the saw unit (38), the other part connected to hook (90), the two parts being arranged so that when a disengagement force is applied to the hook (90), the cam (98) slides along the cam surface (96) to move the hook (90) out of engagement of the catch (92).

2. A saw as claimed in claim 1 wherein the saw unit (38, 22) is connected to a support portion (22) which is pivotally mounted on the mounting portion (16) to allow the saw unit (38) to pivot towards or away from the base assembly (2, 4), the axis (26) of rotation of the drive spindle (48) being substantially parallel to the axis (24) of pivot between support portion (22) and the mounting portion (16);
the guide mechanism (30, 32) enabling the saw unit (38) to move relative to the support portion (22) in order to change the distance between the axis (26) of rotation of the pivotal guard and the axis (24) of pivot between the support portion (22) and the mounting portion (16);
the guide biasing means urging the saw unit (38) towards a position closest to the support portion (22);
**characterised in that** the locking mechanism is capable of locking the position of the saw unit (38) relative to the base assembly (2, 4) when the saw unit is in its upper most pivotal position and in the position closest to the support portion (22).

3. A saw as claimed in claim 1 or 2, wherein the disengagement force can be applied by an operator asserting pressure onto a pad (84) connected to the hook (90) via at least one rod (80, 88).

4. A saw as claimed in any one of the preceding claims, wherein there is further provided a biasing force (94) which biases the cam (98) to slide to a preset position along the cam surface (96).

5. A saw as claimed in claim 4, wherein the biasing force (94) maintains the hook (90) in engagement with the catch (92).

6. A saw as claimed in any of the previous claims, wherein the mounting portion (16) is connected to the saw unit (38) via at least one rail (30, 32).

7. A saw as claimed in claim 6, wherein either the mounting portion (16) or the saw unit (38) is fixed to the at least one rail (30, 32) and the other slides along the at least one rail (30, 32) to change the distance.

8. A saw as claimed in either of claims 6 or 7, wherein the guide biasing means comprises the at least one rail (30, 32) angled relative to the base assembly so as to urge the saw unit to slide towards a position closest to the mounting portion (16).

9. A saw as claimed in claim 8, wherein the at least one rail (30, 32) is biased towards the position where it is angled relative to the base assembly so as to urge the saw unit to slide towards a position closest to the mounting portion (16) by the pivotal biasing means (36).

10. A saw as claimed in any of the previous claims, wherein the mounting portion (16) can pivot relative to the base assembly (2, 4).

11. A saw as claimed in any of the previous claims, wherein there is further provided a pivotal guard actuating mechanism which is capable of moving the at least one pivotal guard (54) from its first position to its second retracted position when the saw unit (38) is pivoted towards the base assembly (2, 4).

12. A saw as claimed in claim 11, wherein the pivotal guard actuating mechanism comprises at least one Bowden cable (60) comprising an inner cable (64) slideable within an outer sleeve (62) and which has two ends, each end comprising two parts, one part being one end of the inner cable (64) and the other part being a corresponding end of the outer sleeve (62),
wherein one part of the first end of the Bowden cable is connected to the base assembly (2, 4) and the other part of the first end of the Bowden cable is connected to the saw unit (38) so that pivotal movement of the saw unit (38) towards the base assembly (2, 4) causes relative movement of the cable (64) of the Bowden cable (60) within the sleeve (62) of the Bowden cable (60); and
one part of the second end of the Bowden cable is connected to the at least one pivotal guard (54) and the other part of the second end of the Bowden cable (60) is connected to the saw unit (38) and is arranged so that the relative movement of the cable (64) of the Bowden cable (60) within the sleeve (62) of the Bowden cable (60) due to the pivotal movement of the saw unit (38) towards the base assembly (2, 4) causes the at least one pivotal guard (54) to move from its first position to its second retracted position.

13. A saw as claimed in claim 12, wherein one part of the first end of the Bowden cable is connected to the base assembly (2, 4) via the mounting portion (16).

14. A saw as claimed in either claims of 12 or 13, wherein the other part of the first end of the Bowden cable is connected to the saw unit (38) via the support portion (22).

## Patentansprüche

1. Säge, umfassend:
eine Unterlagenanordnung (2, 4), die mit einem Montageabschnitt (16) verbunden ist;
eine Sägeeinheit (38, 22), die schwenkbar auf dem Montageabschnitt (16) montiert ist, um es der Sägeeinheit (38) zu ermöglichen, in Richtung auf die Unterlagenanordnung (2, 4) oder von dieser weg zu schwenken, wobei die Sägeeinheit (38) eine Ausgangsantriebsspindel (48) aufweist, auf der ein Kreissägeblatt (28) starr montiert werden kann, um von einem Motor gedreht zu werden;
wobei die Drehachse (26) der Antriebsspindel (48) im Wesentlichen parallel zur Schwenkachse (24) zwischen der Sägeeinheit (38) und dem Montageabschnitt (16) ist;
schwenkbare Vorspannmittel (36), um die Sägeeinheit (38) in ihre oberste Schwenkposition zu drängen;
mindestens eine Schwenkschutzvorrichtung (54), die schwenkbar auf der Sägeeinheit (38) montiert ist und die von einer ersten Position, in der sie mindestens einen Abschnitt des unteren Randes eines Sägeblatts (28) umgibt, wenn es auf der Spindel (48) montiert ist, in eine zweite zurückgezogene Position, in welcher der Abschnitt des unteren Randes des Sägeblatts (28) freigelegt ist, schwenken kann; und
einen Führungsmechanismus (30, 32), der es der Sägeeinheit (38) ermöglicht, sich geradlinig im Verhältnis zu dem Montageabschnitt (16) zu bewegen, um den Abstand zwischen der Drehachse (26) der Schwenkschutzvorrichtung und dem Montageabschnitt (16) zu ändern; und
Führungsvorspannmittel, um die Sägeeinheit (38) in Richtung auf eine Position zu drängen, die dem Montageabschnitt (16) am nächsten liegt; und
einen Sperrmechanismus, der in der Lage ist, die Position der Sägeeinheit (38) im Verhältnis zur Unterlagenanordnung (2, 4) zu sperren, wenn die Sägeeinheit sich in ihrer obersten Schwenkposition und in der Position, die dem Montageabschnitt (16) am nächsten liegt, befindet, wobei der Sperrmechanismus zwei Teile umfasst, wobei der erste Teil einen Haken (90) umfasst, der zweite Teil eine Klinke (92) umfasst, wobei ein Teil auf der Sägeeinheit (38) montiert ist und der andere Teil auf dem Montageabschnitt (16) montiert ist, wobei die beiden Teile ineinander greifen, um die Position der Sägeeinheit im Verhältnis zur Unterlageneinheit (2, 4) zu sperren (2, 4);
**dadurch gekennzeichnet, dass** der Sperrmechanismus einen Freigabemechanismus umfasst, der mit dem Haken (90) verbunden ist und der zwei Teile umfasst, wobei ein erster Teil eine Nockenfläche (96) umfasst, wobei der zweite Teil einen Nockenstößel (98) in Eingriff mit der Nockenfläche (96) umfasst, wobei ein Teil mit der Sägeeinheit (38) verbunden ist, wobei der andere Teil mit dem Haken (90) verbunden ist, wobei die beiden Teile derart angeordnet sind, dass wenn eine Ausrückkraft auf den Haken (90) ausgeübt wird, der Nocken (98) an der Nockenfläche (96) entlang gleitet, um den Haken (90) außer Eingriff mit der Klinke (92) zu bewegen.

2. Säge nach Anspruch 1, wobei die Sägeeinheit (38, 22) mit einem Auflageabschnitt (22) verbunden ist, der schwenkbar auf dem Montageabschnitt (16) montiert ist, um es der Sägeeinheit (38) zu ermöglichen, in Richtung auf die Unterlagenanordnung (2, 4) und von dieser weg zu schwenken, wobei die Drehachse (26) der Antriebsspindel (48) im Wesentlichen zur Schwenkachse (24) zwischen dem Auflageabschnitt (22) und dem Montageabschnitt (16) parallel ist;
wobei es der Führungsmechanismus (30, 32) der Sägeeinheit (38) ermöglicht, sich im Verhältnis zu dem Auflageabschnitt (22) zu bewegen, um den Abstand zwischen der Drehachse (26) der Schwenkschutzvorrichtung und der Schwenkachse (24) zwischen dem Auflageabschnitt (22) und dem Montageabschnitt (16) zu ändern;
wobei die Führungsvorspannmittel die Sägeeinheit (38) in Richtung auf eine Position drängen, die dem Auflageabschnitt (22) am nächsten liegt;
**dadurch gekennzeichnet, dass** der Sperrmechanismus in der Lage ist, die Position der Sägeeinheit (38) im Verhältnis zu Unterlagenanordnung (2, 4) zu sperren, wenn die Sägeeinheit sich in ihrer obersten Schwenkposition und in der Position, die dem Auflageabschnitt (22) am nächsten ist, befindet.

3. Säge nach Anspruch 1 oder 2, wobei die Ausrückkraft von einer Bedienperson ausgeübt werden kann, die Druck auf einen Block (84) ausübt, der mit dem Haken (9) über mindestens eine Stange (80, 88) verbunden ist.

4. Säge nach einem der vorhergehenden Ansprüche, wobei ferner eine Vorspannkraft (94) bereitgestellt wird, die den Nocken (98) vorspannt, damit er bis zu einer voreingestellten Position an der Nockenfläche (96) entlang gleitet.

5. Säge nach Anspruch 4, wobei die Vorspannkraft (94) den Haken (90) mit der Klinke (92) in Eingriff hält.

6. Säge nach einem der vorhergehenden Ansprüche, wobei der Montageabschnitt (16) mit der Sägeeinheit (38) über mindestens eine Schiene (30, 32) verbunden ist.

7. Säge nach Anspruch 6, wobei entweder der Montageabschnitt (16) oder die Sägeeinheit (38) an der mindestens einen Schiene (30, 32) befestigt ist und der bzw. die andere an der mindestens einen Schiene (30, 32) entlang gleitet, um den Abstand zu ändern.

8. Säge nach Anspruch 6 oder 7, wobei das Führungsvorspannmittel die mindestens eine Schiene (30, 32) umfasst, die im Verhältnis zu der Unterlagenanordnung angewinkelt ist, um die Sägeeinheit in Richtung auf eine Position zu drängen, die dem Montageabschnitt (16) am nächsten liegt.

9. Säge nach Anspruch 8, wobei die mindestens eine Schiene (30, 32) in Richtung auf die Position vorgespannt ist, in der sie im Verhältnis zur Unterlagenanordnung angewinkelt ist, um die Sägeeinheit durch die Schwenkvorspannmittel (36) zu drängen, in Richtung auf eine Position zu gleiten, die dem Montageabschnitt (16) am nächsten liegt.

10. Säge nach einem der vorhergehenden Ansprüche, wobei der Montageabschnitt (16) im Verhältnis zu der Unterlagenanordnung (2, 4) schwenkbar ist.

11. Säge nach einem der vorhergehenden Ansprüche, wobei ferner ein Betätigungsmechanismus der Schwenkschutzvorrichtung bereitgestellt wird, der in der Lage ist, die mindestens eine Schwenkschutzvorrichtung (54) aus ihrer ersten Position in ihre zweite zurückgezogene Position zu bewegen, wenn die Sägeeinheit (38) in Richtung auf die Unterlagenanordnung (2, 4) geschwenkt wird.

12. Säge nach Anspruch 11, wobei der Betätigungsmechanismus der Schwenkschutzvorrichtung mindestens einen Seilzug (60) umfasst, der mindestens ein Innenkabel (64) umfasst, das in einer Außenhülse (62) gleiten kann und das zwei Enden aufweist, wobei jedes Ende zwei Teile umfasst, wobei ein Teil ein Ende des Innenkabels (64) ist und der andere Teil ein entsprechendes Ende der Außenhülse (62) ist,
wobei ein Teil des ersten Endes des Seilzugs mit der Unterlagenanordnung (2, 4) verbunden ist und der andere Teil des ersten Endes des Seilzugs mit der Sägeeinheit (38) verbunden ist, so dass eine Schwenkbewegung der Sägeeinheit (38) in Richtung auf die Unterlagenanordnung (2, 4) eine relative Bewegung des Kabels (64) des Seilzugs (60) innerhalb der Hülse (62) des Seilzugs (60) verursacht; und
ein Teil des zweiten Endes des Seilzugs mit der mindestens einen Schwenkschutzvorrichtung (54) verbunden ist und der andere Teil des zweiten Endes des Seilzugs (60) mit der Sägeeinheit (38) verbunden ist und derart angeordnet ist, dass die relative Bewegung des Kabels (64) des Seilzugs (60) in der Hülse (62) des Seilzugs (60) auf Grund der Schwenkbewegung der Sägeeinheit (38) in Richtung auf die Unterlagenanordnung (2, 4) die mindestens eine Schwenkschutzvorrichtung (54) veranlasst, sich von ihrer ersten Position in ihre zweite zurückgezogene Position zu bewegen.

13. Säge nach Anspruch 12, wobei ein Teil des ersten Endes des Seilzugs mit der Unterlagenanordnung (2, 4) über den Montageabschnitt (16) verbunden ist.

14. Säge nach Anspruch 12 oder 13, wobei der andere Teil des ersten Endes des Seilzugs mit der Sägeeinheit (38) über den Auflageabschnitt (22) verbunden ist.

## Revendications

1. Scie comprenant :
un ensemble de base (2, 4) raccordé à une partie de montage (16) ;
une unité de scie (38, 22) montée de manière pivotante sur la partie de montage (16) pour permettre à l'unité de scie (38) de pivoter vers ou loin de l'ensemble de base (2, 4), l'unité de scie (38) comportant un axe d'entraînement de sortie (48) sur laquelle une lame de scie circulaire (28) peut être montée de manière rigide pour être entraînée en rotation par un moteur ;
l'axe (26) de rotation de l'axe d'entraînement (48) étant sensiblement parallèle à l'axe (24) de pivotement entre l'unité de scie (38) et la partie de montage (16) ;
un moyen de poussée pivotant (36) pour pousser l'unité de scie (38) dans sa position de pivotement la plus haute ;
au moins une protection pivotante (54) montée de manière pivotante sur l'unité de scie (38) pouvant pivoter d'une première position, dans laquelle elle entoure au moins une partie du bord inférieur d'une lame de scie (28) quand elle est montée sur l'axe (48), à une seconde position rétractée dans laquelle la partie du bord inférieur de le lame de scie (28) est exposée ; et
un mécanisme de guidage (30, 32) qui permet à l'unité de scie (38) de se déplacer linéairement par rapport à la partie de montage (16) de façon à modifier la distance entre l'axe (26) de rotation de la protection pivotante et la partie de montage (16) ; et
un moyen de poussée de guidage pour pousser l'unité de scie (38) vers une position la plus proche de la partie de montage (16) ; et
un mécanisme de verrouillage capable de verrouiller la position de l'unité de scie (38) par rapport à l'ensemble de base (2, 4) quand l'unité de scie est dans sa position de pivotement la plus haute et dans la position la plus proche de la partie de montage (16), dans laquelle le mécanisme de verrouillage comprend deux parties, la première partie comprenant un crochet (90), la deuxième partie comprenant un loquet (92), dans laquelle une partie est montée sur l'unité de scie (38), et l'autre partie est montée sur la partie de montage (16), les deux parties s'accouplant l'une à l'autre pour verrouiller la position de l'unité de scie par rapport à l'ensemble de base (2,4) ;
**caractérisé en ce que** le mécanisme de verrouillage comprend un mécanisme de libération raccordé au crochet (90) et comprenant deux parties, une première partie comprenant une surface de came (96), la deuxième partie comprenant un galet suiveur (98) en accouplement avec la surface de came (96), une partie raccordée à l'unité de scie (38), l'autre partie raccordée au crochet (90), les deux parties étant agencées de telle manière que quand une force de désaccouplement est appliquée au crochet (90), la came (98) coulisse le long de la surface de came (96) pour déplacer le crochet (90) hors d'accouplement avec le loquet (92).

2. Scie selon la revendication 1, dans laquelle l'unité de scie (38, 22) est raccordée à une partie de support (22) montée de manière pivotante sur la partie de montage (16) pour permettre à l'unité de scie (38) de pivoter vers ou loin de l'ensemble de base (2, 4), l'axe (26) de rotation de l'axe d'entraînement (48) étant sensiblement parallèle à l'axe (24) de pivotement entre la partie de support (22) et la partie de montage (16) ;
le mécanisme de guidage (30, 32) permettant à l'unité de scie (38) de se déplacer par rapport à la partie de support (22) de manière à modifier la distance entre l'axe (26) de rotation de la protection pivotante et l'axe (24) de pivotement entre le partie de support (22) et la partie de montage (16) ;
le moyen de poussée de guidage poussant l'unité de scie (38) vers une position la plus proche de la partie de support (22) ;
**caractérisé en ce que** le mécanisme de verrouillage est capable de verrouiller la position de l'unité de scie (38) par rapport à l'ensemble de base (2, 4) quand l'unité de scie est dans sa position de pivotement la plus haute et dans la position la plus proche de la partie de support (22).

3. Scie selon les revendications 1 ou 2, dans laquelle la force de désaccouplement peut être appliquée par un opérateur exerçant une pression sur un coussinet (84) raccordé au crochet (90) par l'intermédiaire d'au moins une tige (80, 88).

4. Scie selon l'une quelconque des revendications précédentes, dans laquelle une force de poussée (94) pousse la came (98) pour coulisser dans une position prédéterminée le long de la surface de came (96).

5. Scie selon la revendication 4, dans laquelle la force de poussée (94) maintient le crochet (90) en accouplement avec le loquet (92).

6. Scie selon l'une quelconque des revendications précédentes, dans laquelle la partie de montage (16) est raccordée à l'unité de scie (38) par l'intermédiaire d'au moins une glissière (30, 32).

7. Scie selon la revendication 6, dans laquelle la partie de montage (16) ou l'unité de scie (38) est fixée à la au moins une glissière (30, 32) et l'autre coulisse le long de la au moins une glissière (30, 32) pour modifier la distance.

8. Scie selon l'une des revendications 6 ou 7, dans laquelle le moyen de poussée de guidage comprend la au moins une glissière (30, 32) inclinée par rapport à l'ensemble de base de façon à pousser l'unité de scie pour coulisser vers une position la plus proche de la partie de montage (16).

9. Scie selon la revendication 8, dans laquelle la au moins une glissière (30, 32) est poussée vers la position dans laquelle elle est inclinée par rapport à l'ensemble de base de façon à pousser l'unité de scie pour coulisser vers une position la plus proche de la partie de montage (16) par le moyen de poussée pivotant (36).

10. Scie selon l'une quelconque des revendications précédentes, dans laquelle la partie de montage (16) peut pivoter par rapport à l'ensemble de base (2, 4).

11. Scie selon l'une quelconque des revendications précédentes, comprenant également un mécanisme d'actionnement de protection pivotante capable de déplacer la au moins une protection pivotante (54) de sa première position à sa deuxième position rétractée quand l'unité de scie (38) est pivotée vers l'ensemble de base (2, 4).

12. Scie selon la revendication 11, dans laquelle le mécanisme d'actionnement de protection pivotante comprend au moins un câble Bowden (60) comprenant un câble intérieur (64) pouvant coulisser dans un manchon extérieur (62) et comportant deux extrémités, chaque extrémité comprenant deux parties, une partie étant une extrémité du câble intérieur (64) et l'autre partie étant une extrémité correspondante du manchon extérieur (62),
dans laquelle une partie de la première extrémité du câble Bowden est raccordée à l'ensemble de base (2, 4) et l'autre partie de la première extrémité du câble Bowden est raccordée à l'unité de scie (38) de telle sorte que le mouvement pivotant de l'unité de scie (38) vers l'ensemble de base (2, 4) entraîne le mouvement relatif du câble (64) du câble Bowden (60) à l'intérieur du manchon (62) du câble Bowden (60) ; et
une partie de la deuxième extrémité du câble Bowden est raccordée à la au moins une protection pivotante (54) et l'autre partie de la deuxième extrémité du câble Bowden (60) est raccordée à l'unité de scie (38) et est disposée de telle sorte que le mouvement relatif du câble (64) du câble Bowden (60) à l'intérieur du manchon (62) du câble Bowden (60) dû au mouvement pivotant de l'unité de scie (38) vers l'ensemble de base (2, 4) entraîne le déplacement de la au moins une protection pivotante (54) de sa première position à sa deuxième position rétractée.

13. Scie selon la revendication 12, dans laquelle une partie de la première extrémité du câble Bowden est raccordée à l'ensemble de base (2, 4) par l'intermédiaire de la partie de montage (16).

14. Scie selon les revendications 12 ou 13, dans laquelle l'autre partie de la première extrémité du câble Bowden est raccordée à l'unité de scie (38) par l'intermédiaire de la partie de support (22).
